# EUROPEAN PATENT SPECIFICATION

(11) **EP 0 358 836 B1**
(45) Date of publication and mention of the grant of the patent: **28.04.1993**
(21) Application number: 88830371.6
(22) Date of filing: 14.09.1988
(51) Int. Cl.: B30B 9/12

(54) **System for manufacturing shafts for the helical elements in dehydrating screw presses**
System zum Herstellen von Wellen für die schraubenförmigen Elemente in Entwässerungsschneckenpressen
Système pour fabriquer des arbres pour les éléments hélicoidaux dans des presses de déshydratation à vis

(43) Date of publication of application: 21.03.1990
(73) Proprietor: FRATELLI BABBINI & C. sas, I-47012 Civitella di Romagna (Forli) (IT)
(72) Inventor: Babbini, Lionello, Loc. Belchiaro Civitella (Forli) (IT)
(74) Representative: Modiano, Guido, Dr.-Ing.

(56) References cited:
- DE-C- 681 109
- GB-A- 2 129 700

## Description

The invention refers to a new conception proceeding for manufacturing the shafts of the helical elements to be used in special deshydrating presses. These presses are used to deshydrate fibrous materials containing liquids, such us foragers, and also in the manufacturing treatment of the sugar beet, of fish and meats.

These presses are foreseen with a longitudinal filtering cage in which the product to treat is at first charged and presses, in a subsequent phase, by means of one or more helical elements, and while the deshydated residue is discharged at the cage end, the liquid comes out steadily from the outer cage as well as from draining canales built-in the helical elements. In order to avoid a considerable reduction of the helical element, limited size draining canals were initially foreseen. A futher proceeding foresees the draining shaft by means of composition, on a central tubular part which will form the shaft of the helical element, of a peg system in radial disposition holding a drilled cage. This proceeding allows an efficient draining effect, but it weakens the resistance of the shaft which supports the system of pegs and, therefore, of the helical helement. A present proceeding for manufacturing either cylindrical or conical shafts is the calendering one which carries out half-part shaping with subsequent welding. A third known system foresees to, manufacture the shaft from an initial flat shape which is forged around a core to subsequently extract.

DE-C-681 109 discloses a shaft as defined in the pre-characterizing portion of the appended claim 1, in which various longitudinal elements of quadrilangular cross-section are mutually joined at their respective longitudinal edges in order to form the shaft.

In comparison with all these known proceedings, the invention system enables to manufacture the shaft simply by means of composition of longitudinal forms to assemble through welding lines and either by using or not finishing operations. In this way, a general operational simplification is allowed by previously arranging the forms to use as a store and by forming the parts as a shaft by means of adjustment, if required, their arrangement in composition and by fixing the components according to essential welding lines.

Substantially, the system foresees the essential use of a form 1 having an ideally square section, with a chamfer 2 on a corner to obtain by milling, in order to form the adherence wall 3 to the subsequent composition form. The assembling condition is obtained by working with inside 4 and outside 5 welding wires. By means of turning, parts 6 and 7 are then removed, thus obtaining the tubular form of the shaft. The system thus allows to use the same models for carrying out shafts with different thickness and diameters. In a version, the direct manufacturing of shafts with chamfers 2, 5 and 6 is foreseen to allow shafts with constant size and by manufacturing without adjusting operations.

To manufacture cylindrical shafts, the system uses longitudinal models with constant section, and londitudinal models with progressively changing section for obtaining conical shafts with changing section. To form shafts with draining canals, on the contrary, essential longitudinal modules with square section 8 and rectangular section 9 are used; these last ones with hollows 10 and 11 on the inside corners to form the walls adhering to the ones of the other interposed form. The forming of the above whole can be obtained by assembling the components by means of the welding wires 12, 13, 14 and 15. In order to form the outer filtering cage, shapes 16 are positioned on the modules 8 and are blended with the bent sectors 17 in drilled plate by assembling the parts by means of the welding wires 18 and 19. The shaft with filgering cage thus obtained shows the system of draining canals 20 for the end discharge completed with shapes 21 fitted inside with modules 8.

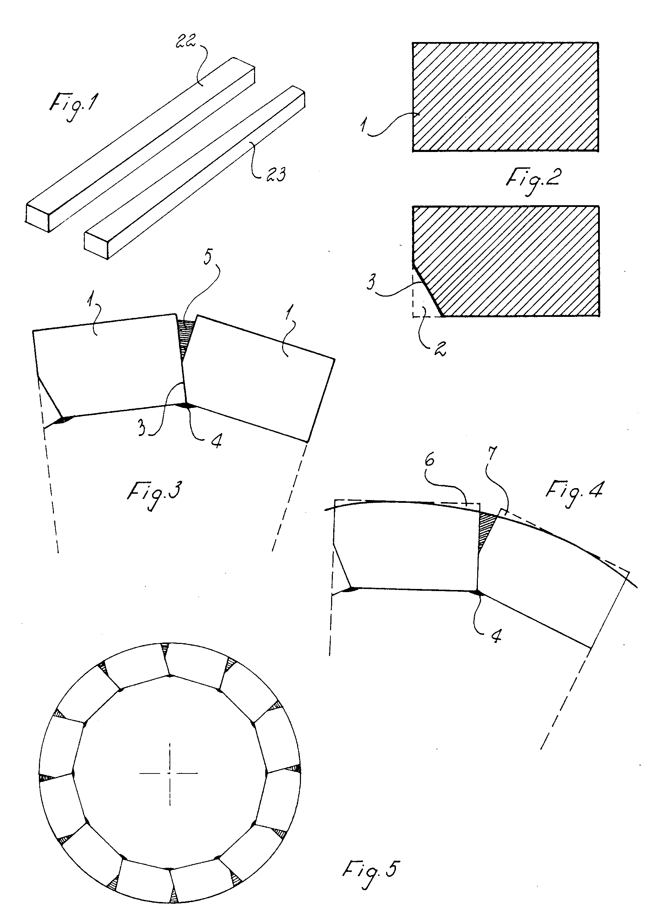

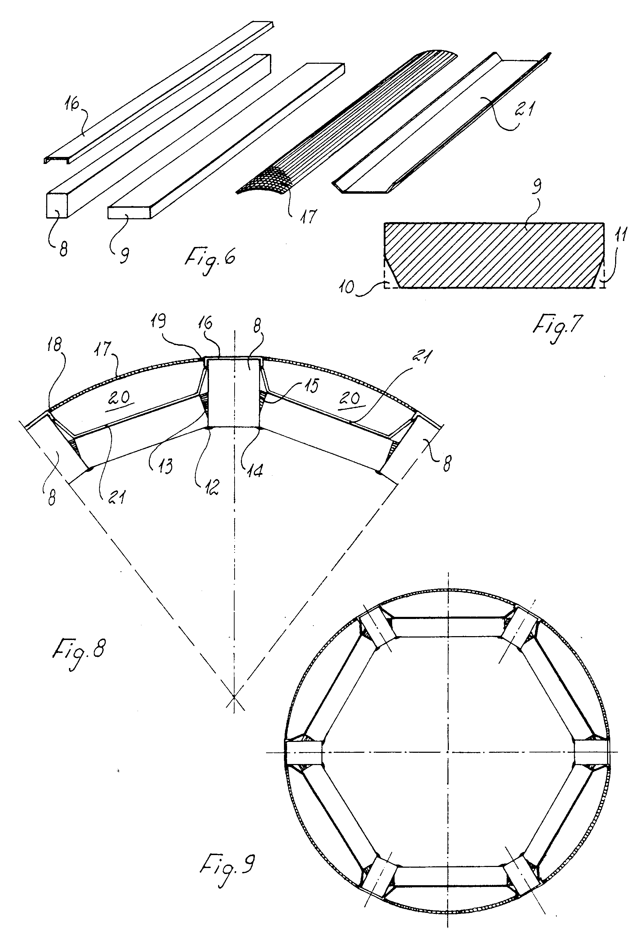

Execution forms of two shafts, one of which without grooves and the other with filtering cage, both carried out according to the system foreseen by the present invention, are illustrated in the drawings of tables 1 and 2. With reference to these tables in table 1 the components and the execution system of an elementary shaft are illustrated. Fig. 1 is the perspective view respectively of a longitudinal modular component 22, of parallelopiped type, apt to compose cylindrical shafts, and of another component 23 for composing conical shafts. Fig. 2 shows the square section of a longitudinal modular component and subsequently the same section from which part 2 has been removed by means of milling. Fig. 3 is a view of the operative sector to show the assembled condition carried out between two components 1 which have been connected on wall 3, with execution of the inside 4 and outside 5 welding wires execution. The subsequent operation phase, which leads to the completion of the operation by turning and removing parts 5 and 6, can be noted in a particular of fig. 4. Fig. 5 is the view of a shaft transversal section obtained by means of a longitudinal form 1. In table 2, the components and the execution system are illustrated to obtain a shaft with filtering cage and radial scheme drain canals. With reference to this last one, fig. 6 is the perspective view of the used components: the type 8 and 9 longitudinal forms, shape 16, one sector 17 in drilled plate and a canalization shape 21. Fig. 7 is the view in transversal section of the component 8 form which parts 10 and 11 have been removed by means of milling. Fig. 8 is the view of a sectors of the above shaft to show the location of the parts and the welding lines through which the operation of the shaft inside is integral which supports the drilled cage consisting of forms 16 and 17. Fig. 9 is the view in transversal section of a shaft with draining canals carried out according to the present invention.

In the realizations, the shape and number of the modular structures to use in the system and in carrying out each shaft may anyhow be different. The modular components, as well as those forming the filtering cage may be carried out in different ways too and in any possibile materials and, if required, they may be replaced with other equivalent elements for the use finalities.

## Claims

1. System for manufacturing shafts for the helical elements in dehydrating screw presses, comprising a plurality of longitudinal modules (8,9,22,23) having an initial substantially quadrilangular cross-section which are mutually connected along their longitudinal borders by means of welding wires (4,5,12,13,14,15) to thereby form said shaft, characterized in that said modules comprise a milled chamfer (2,10) at one corner so as to form an adherence wall (3) which abuts against an adjacent module, said welding wires being provided above and below said adherence wall.

2. System according to claim 1, characterized in that said longitudinal modules (22,23) are provided with further corner chamfers (6,7) for forming a final shaft in tubular form.

3. System according to any one of claims 1 and 2, characterized in that said longitudinal modules (22) have a constant cross-section for forming cylindrical shafts.

4. System according to any one of claims 1 and 2, characterized in that said longitudinal modules (23) have a progressively variable cross-section for forming conical shafts.

5. System according to claim 1, characterized in that said longitudinal modules comprise square section longitudinal modules (8) alternated with rectangular section longitudinal modules (9) which are provided with two of said milled chamfers (10,11) for forming said adherence walls which abut against said square section longitudinal modules (8) which project above the plane of arrangement of said rectangular section longitudinal modules (9), the system further comprising drilled plate filter sectors (17) interconnected between profiled elements (16) connected to the tops of said square section longitudinal modules (8) to form an outer cylindrical shape of the shaft, and canalization profiled elements (21) also interconnected between said profiled elements but lying above said rectangular section longitudinal modules (9) to there by form shafts with draining canals (20).

## Patentansprüche

1. System zum Herstellen von Wellen für die schraubenförmigen Elemente in Entwässerungsschneckenpressen mit einer Mehrzahl von Längsmodulen (8,9,22,23), welche ursprünglich einen im wesentlichen vierkantigen Querschnitt haben und wechselseitig entlang ihrer Längsränder durch Schweißdrähte (4,5,12,13,14,15) unter Ausbildung der Welle verbunden sind,
dadurch gekennzeichnet,
daß die Module an einer Ecke eine abgeschrägte Kante (2,10) zur Bildung einer Anheftungswand (3) aufweisen, welche gegen einen benachbarten Modul anliegt, wobei die Schweißdrähte oberhalb und unterhalb der Anheftungswand vorgesehen sind.

2. System nach Anspruch 1,
dadurch gekennzeichnet,
daß die Längsmodule (22,23) mit weiteren Eckenabschrägungskanten (6,7) zur Bildung einer Endwelle in Rohrform versehen sind.

3. System nach Anspruch 1 oder 2,
dadurch gekennzeichnet,
daß die Längsmodule (22) zur Bildung zylindrischer Wellen einen konstanten Querschnitt aufweisen.

4. System nach Anspruch 1 oder 2,
dadurch gekennzeichnet,
daß die Längsmodule (23) zur Bildung konischer Wellen einen progressiv, variablen Querschnitt aufweisen.

5. System nach Anspruch 1,
dadurch gekennzeichnet,
daß die Längsmodule Längsmodule (8) mit quadratischem Querschnitt abwechselnd mit Längsmodulen (9) mit rechteckigem Querschnitt aufweisen, welche mit zwei der abgeschrägten Kanten (10,11) zur Bildung der Anheftungswände versehen sind, die gegen die Längsmodule (8) mit quadratischem Querschnitt anliegen, welche über die Ebene der Anordnung der Längsmodule (9) mit rechtwinkligem Querschnitt hervorstehen, wobei das System ferner mit Löchern versehene Plattenfiltersektoren (17) aufweist, die zwischen profilierten Elementen (16) verbunden sind, die mit den Oberseiten der Längsmodule (8) mit quadratischem Querschnitt zur Bildung einer äußeren zylindrischen Oberfläche der Welle verbunden sind, wobei Kanalisationsprofilelemente (21) ebenfalls zwischen den Profilelementen verbunden sind, die aber zur Bildung von Wellen mit Drainagekanälen (20) oberhalb der Längsmodule (9) mit rechteckigem Querschnitt liegen.

## Revendications

1. Dispositif pour la fabrication d'arbres pour les éléments hélicoïdaux de presses de déshydratation à vis, dispositif comprenant une pluralité de modules longitudinaux (8, 9, 22, 23) possédant une section droite initiale pratiquement quadrangulaire et mutuellement raccordés, selon leurs bordures longitudinales, au moyen de cordons de soudage (4, 5, 12, 13, 14, 15) afin de former ainsi ledit arbre,
dispositif caractérisé en ce que lesdits modules comprennent un chanfrein fraisé (2, 10) sur un coin de façon à former un paroi d'adhérence (3) venant en butée contre un module adjacent, lesdits cordons de soudage étant prévus au dessus et en dessous de ladite paroi d'adhérence.

2. Dispositif selon la revendication 1, caractérisé en ce que lesdits modules longitudinaux (22, 23) sont munis de chanfreins supplémentaires de coin (6, 7) afin de former un arbre final de forme tubulaire.

3. Dispositif selon l'une quelconque des revendications 1 et 2, caractérisé en ce que lesdits modules longitudinaux (22) possèdent une section droite constante afin de former des arbres cylindriques.

4. Dispositif selon l'une quelconque des revendications 1 et 2, caractérisé en ce que lesdits modules longitudinaux (23) possèdent une section droite progressive afin de former des arbres coniques.

5. Dispositif selon la revendication 1, caractérisé en ce que lesdits modules longitudinaux comprennent des modules longitudinaux (8) de section carrée, alternés avec des modules longitudinaux (9) de section rectangulaire et munis de deux desdits chanfreins fraisés (10, 11) afin de former lesdites parois d'adhérence venant en butée contre lesdits modules longitudinaux (8) de section carrée se projetant au dessus du plan d'agencement desdits modules longitudinaux (9) de section rectangulaire, le dispositif comprenant, de plus, des secteurs de filtration (17) d'une plaque ajourée raccordés entre les éléments profilés (16) raccordés aux sommets desdits modules longitudinaux (8) de section carrée afin de former une configuration externe cylindrique de l'arbre et des éléments profilés de canalisation (21) raccordés, de même, entre lesdits éléments profilés mais s'étendant au dessus desdits modules longitudinaux (9) de section rectangulaire afin de former ainsi des arbres munis de canaux de drainage (20).
